**Europäisches Patentamt**

**European Patent Office**

**Office européen des brevets**

(11) Veröffentlichungsnummer: **0 229 650 B1**

(12) **EUROPÄISCHE PATENTSCHRIFT**

(45) Veröffentlichungstag der Patentschrift: **21.11.91**

(51) Int. Cl.5: **G11B 7/24**

(21) Anmeldenummer: **87100247.3**

(22) Anmeldetag: **10.01.87**

(54) **Optisches Aufzeichnungsmedium, ein Verfahren zu seiner Herstellung sowie seine Verwendung als Read Only Memory-Informationsträger.**

(30) Priorität: **15.01.86 DE 3600902**
**12.03.86 DE 3608213**

(43) Veröffentlichungstag der Anmeldung:
**22.07.87 Patentblatt 87/30**

(45) Bekanntmachung des Hinweises auf die
Patenterteilung:
**21.11.91 Patentblatt 91/47**

(84) Benannte Vertragsstaaten:
**CH DE FR GB IT LI NL SE**

(56) Entgegenhaltungen:
**EP-A- 0 058 496**
**EP-A- 0 062 975**
**EP-A- 0 214 539**

**PATENT ABSTRACTS OF JAPAN, Band 6, Nr. 82 (P-116)[960], 20. März 1982; & JP-A-57 18 031 (SONY K.K.) 29-01-1982**

**PATENT ABSTRACTS OF JAPAN, Band 8, Nr. 28 (M-274)[1465], 7. Februar 1984; & JP-A-58 185 293 (NIPPON DENSHIN DENWA KOSHA) 28-10-1983**

**PATENT ABSTRACTS OF JAPAN, Band 9, Nr.**

**64 (P-343)[1787], 23. März 1985; & JP-A-59 198 546 (NIPPON DENSHIN DENWA KOSHA) 10-11-1984**

**Neumüller, Chemic-Lexikon, Stuttgart 1981, S.1540**

**Encyclopedia of Chemical Technology, Band 4, USA 1978, S.615**

(73) Patentinhaber: **BASF Aktiengesellschaft**
**Carl-Bosch-Strasse 38**
**W-6700 Ludwigshafen(DE)**

(72) Erfinder: **Schrott, Wolfgang, Dr.**
**Bruesseler Ring 45**
**W-6700 Ludwigshafen(DE)**
Erfinder: **Neumann, Peter, Dr.**
**Franz-Schubert-Strasse 1**
**W-6908 Wiesloch(DE)**
Erfinder: **Hauser, Peter, Dr.**
**Saarstrasse 2**
**W-6703 Limburgerhof(DE)**
Erfinder: **Wagenblast, Gerhard, Dr.**
**Hanns-Fay-Strasse 3**
**W-6710 Frankenthal(DE)**

**Beschreibung**

Die vorliegende Erfindung betrifft ein neues optisches Aufzeichnungsmedium mit Graphit als Speichermaterial, ein Verfahren zu seiner Herstellung sowie seine Verwendung als Read Only Memory-Informationsträger.

Als optisches Aufzeichnungsmedium zur analogen oder digitalen Speicherung von Informationen mit Hilfe eines Laserlichtstrahles ist eine große Anzahl von Materialien beschrieben. Die Informationen werden dabei in Form von Löchern, Pits oder Blasen bzw. durch Phasenumwandlungen oder andere lokale Eigenschaftsänderungen in das jeweilige Speichermedium "eingeschrieben". Als Speichermedien sind dünne Schichten aus anorganischen Materialien, wie Metalle, Legierungen, dotierte Metalle, Metalloxide oder Metallsulfide, sowie aus organischen Verbindungen, insbesondere Farbstoffe aber auch flüssigkristalline Verbindungen oder Polymere sowie deren Kombinationen, beschrieben.

Farbstoffe weisen eine hohe Absorption auf, die auf die betreffende Laserwellenlänge hin optimiert werden kann, und zeichnen sich dabei durch niedrige Wärmeleitfähigkeit und variable Verarbeitungsmöglichkeiten (z.B. Vakuumverdampfen, Spincoating mit und ohne Bindemittel oder andere Zusatzstoffe) aus. Ihre optischen Daten (Real- und Imaginäranteil des Brechungsindex, $[n,k]\lambda$) sind zumeist nicht ausreichend, so daß ein qualitativ hochwertiger Speicher nur mit abgestimmten Schichtdicken bzw. mit einer zusätzlichen Reflektorschicht erhalten werden kann. Darüber hinaus sind nur wenige geeignete IR-Farbstoffe bekannt, die im nahen Infrarotbereich (750 - 900 nm) ausreichend absorbieren, d.h., in dem Spektralbereich, in dem die technisch vorteilhaften Halbleiterlaser vom GaAlAs-Typ Licht emittieren, und mit denen optische Aufzeichnungsmedien sinnvoll "beschrieben" und "ausgelesen" werden. Daher sind zur Optimierung solcher Systeme Zusätze, wie Ruß oder Sauerstoff-Quencher notwendig, die einen "synergistischen Effekt" bewirken, die jedoch auch die Herstellung der Speicherschichten komplizieren.

Dünne Metallschichten, insbesondere Tellur und dessen Legierungen sowie modifizierte Materialien auf Basis von Tellur weisen zwar geeignete optische Daten (ausreichende Absorption und Reflexion) in einem breiten Wellenlängenbereich auf, zeigen jedoch relativ hohe Wärmeleitfähigkeiten und sind zumeist sehr korrosionsempfindlich.

Aufgabe der vorliegenden Erfindung war es, ein neues optisches Aufzeichnungsmedium bereitzustellen. Dabei sollte von einem ausreichend reflektierenden Material ausgegangen werden, welches sich leicht bearbeiten läßt und über eine hohe Stabilität unter Anwendungsbedingungen verfügt.

Graphit, der auf Grund seiner Schichtstruktur Eigenschaften von organischen und anorganischen (metallischen) Materialien aufweist, sollte ein geeignetes Speichermaterial darstellen.

In der DE-A-2 150 134 ist ein optisches Aufzeichnungsmedium beschrieben, welches aus einer dünnen (ca. 0,5 - 1,0 $\mu$m) Schicht aus Rußteilchen in einem polymeren Bindemittel, vorzugsweise plastifizierte Nitrocellulose, auf einem wärmebeständigen Substrat (Glas) besteht. Mittels eines Laserstrahls wird das Schichtmaterial an den bestrahlten Stellen selektiv verdampft oder weggebrannt und dadurch ein Bild erzeugt.

Es hat sich jedoch gezeigt, daß aufgesprühte, bindemittelhaltige Rußschichten infolge der Oberflächenrauhigkeit nur eine geringe Reflektivität aufweisen und daher qualitativ hochwertige Speichermedien nur mit abgestimmten Schichtdicken bei vollständigem Materialabtrag erhalten werden und die Informationsdichte (durch große Signalfläche und Signalabstand) begrenzt bleibt.

Es wurde nun ein optisches Aufzeichnungsmedium gefunden, enthaltend eine Speicherschicht und eine oder zwei vorgerillte Substratschichten, wobei die Speicherschicht Graphit als Speichermaterial enthält.

Es wurde weiterhin gefunden, daß mit gepreßtem Graphit drastische Qualitätsverbesserungen unabhängig von der Schichtdicke erzielt werden. Außerdem kann bei der Herstellung der Speicherschicht auf einfache Verfahren zurückgegriffen werden.

Aufgrund der hohen Korrosionsbeständigkeit (Chemostabilität) von Graphit, seiner Stabilität unter Anwendungsbedingungen sowie seiner toxikologischen Unbedenklichkeit eignet sich das System in idealer Weise für eine breite Anwendung im Bereich der Datenspeicher und anderer Aufzeichnungsmedien. Außerdem eignet sich Graphit in Form hochwertiger Folien besonders günstig als Speichermaterial, da aufgrund der Oberflächenqualität eine hohe Lichtreflexion in einem weiten Wellenlängenbereich auftritt. Damit ist das Speichermaterial unabhängig von der Wellenlänge des verwendeten Laserlichtes.

Das neue optische Aufzeichnungsmedium wird vorteilhaft erhalten, wenn man aus einer Graphitfolie einen Rohling mit einem Durchmesser von 10 bis 30 cm ausstanzt, diesen anschließend bei einem Druck von 300 bis 8000 bar (1 bar = $10^5$ Pa) vorzugsweise 500 bis 5000 bar und insbesondere 700 bis 1000 bar preßt und ihn anschließend in einem weiteren Preßvorgang mit einer oder zwei vorgerillten Substratschichten versieht.

Das erfindungsgemäße Verfahren wird zweckmäßig so durchgeführt, daß man aus einer vorgepreßten Folie aus Graphit Scheiben mit einem Durchmesser von 10 bis 30 cm ausstanzt und diese in einem Preßwerkzeug preßt. Zweckmäßig verwendet man dabei handelsübliche, vorgepreßte Folien aus Graphit in reiner oder faserverstärkter Form (s.a. Ullmanns Encyklopädie der technischen Chemie, 4. Auflage, Band 14, Seite 616), wie sie z.B. auch zur Herstellung von Dichtungen für chemische Apparate verwendet werden. Der Preßvorgang findet üblicherweise bei Raumtemperatur statt. Der jeweils optimale Druck richtet sich nach der Art des verwendeten Folienmaterials und nach der Fläche der Graphitscheibe. Beim Preßvorgang werden die vororientierten Graphitdomänen (Schichtstrukturen) weiter ausgerichtet und die Oberfläche homogenisiert, wobei ein metallischer Glanz auftritt. Bereits diese Schicht läßt sich mit einem Laserlichtstrahl "beschreiben". Die Eigenschaften dieses Speichers sind im allgemeinen nur von der Oberflächenqualität abhängig, nicht aber von der Schichtdicke.

Zur mechanischen Stabilisierung wird diese Graphitschicht mit einer oder zwei vorgerillten Substratschichten versehen. Diese bieten zusätzlich einen mechanischen Schutz der Oberfläche und somit der gespeicherten Information.

Als Substratschichten kommen alle diejenigen Materialien (Glas und Polymermaterialien) in Betracht, die ausreichende optische Qualitäten aufweisen. Vorzugsweise verwendet man Substratschichten aus Polymermaterial. Besonders bevorzugt sind dabei solche Substratschichten, die im wesentlichen aus Polymethylmethacrylat oder Polycarbonat bestehen.

Die Substratschichten können in einem zweiten Preßvorgang unter analogen Preßbedingungen, z.B. in Form von Disketten mit einer Dicke von 0,2 cm, auf die Graphitschicht aufgepreßt werden. Um ein optimales Haftvermögen der Substratschicht(en) auf dem Graphit zu erhalten, kann es von Vorteil sein, zusätzlich einen Klebstoff zu verwenden, um so ein Ankleben der Substratschicht(en) zu erreichen. Als Klebstoffe kommen dabei die üblichen, an sich bekannten Materialien, wie sie beispielsweise in Ullmanns Encyklopädie der technischen Chemie, 4. Auflage, Band 14, S. 227 f, beschrieben sind, in Betracht.

Vorgerillte Substratschichten werden verwendet, um auf diese Weise eine Spurführung und schnellen Datenzugriff zu ermöglichen. Je nach Herstellungsbedingungen des Speichers können die Rillen im Substrat frei bleiben oder mit einem Material (z.B. Klebstoff) mit höherem Brechungsindex ausgefüllt werden.

Wie sich überraschenderweise gezeigt hat, wirkt sich die Wärmeleitfähigkeit der Speicherschicht ($\lambda$ > 200 W/mK, in Schichtrichtung), die infolge der Schichtstruktur einen hohen Anisotropiekoeffizienten (ca. 30) aufweist, nicht hinderlich aus, wenn man mit relativ kurzzeitigen Laserlichtimpulsen belichtet.

Für die dokumentarische Archivierung von großen Mengen von Daten und Informationen besteht ein zunehmender Bedarf an solchen Systemen, die dies auf kleinstem Raum und mit möglichst geringer Zugriffszeit ermöglichen. Mit der Verfeinerung der Halbleiterlasertechnologie hat die Entwicklung von optischen Speichermedien sowie von Schreib- und Lesevorrichtungen eingesetzt, die den herkömmlichen magnetischen Medien in vielen Punkten überlegen sind.

Als optische Speichermedien sind sowohl lesbare (Read Only Memories - ROM), einmal beschreib- und lesbare (Write Once Read Many - WORM) und löschbare Medien (erase) prinzipiell bekannt. Ihre Herstellung ist jedoch sehr aufwendig. Dies betrifft sowohl die Herstellung und Reinigung der verwendeten Speichermaterialien, als auch die Herstellung des Speichers (Dünnschichttechnologie, z.B. Sputtern, Vakuumverdampfen oder Spincoating mit definierten Schichtdicken). Darüber hinaus bereiten viele Speichermaterialien Probleme im Bereich der Langzeitstabilität durch Oxidationsempfindlichkeit oder Morphologieinstabilität (Rekristallisation amorpher Schichten).

Zur oben erwähnten dokumentarischen Archivierung eignen sich neben Bändern und Karten insbesondere Compact Disc Read Only Memories (CD-ROM), da sie auf kleinstem Raum eine große Menge an Daten und Informationen aufnehmen können, die beliebig oft und mit geringer Zugriffszeit abgerufen werden können. Außerdem verfügen sie über eine große Langzeitstabilität.

Bisher bekannte optische ROM-Speicher bestehen aus einem, die Informationen enthaltenden Substrat (Polymer oder Glas mit Photolack-Schicht), welches mit einer dünnen Metallschicht (vorzugsweise Aluminium) versehen ist, womit der abtastende Laserlichtstrahl reflektiert wird.

Eine weitere Aufgabe der vorliegenden Erfindung lag darin, ein billiges Speichermedium bereitzustellen, bei dem die kostspielige Reflektor-Schicht (Vakuumverdampfen) eingespart werden kann.

Es wurde nun weiterhin gefunden, daß man das erfindungsgemäße optische Aufzeichnungsmedium, vorteilhaft als Read Only Memory-Informationsträger verwenden kann, wobei der ROM-Informationsträger vorteilhaft in Form von Compact Discs, Karten oder Bändern vorliegt. Insbesondere sind Compact Discs und Karten zu nennen.

ROM-Informationsträger in Form von Compact Discs erhält man beispielsweise, wenn man in die oben beschriebenen Graphitscheiben mittels eines Masters die zu speichernde Information einpreßt. Zum Schutz der Oberflächen (Information) und zur mechanischen Stabilisierung kann diese Graphitschicht erfindungsgemäß mit einer oder zwei Substratschichten versehen werden.

In analoger Weise können auch Read Only Memory-Informationsträger in Form einer Karte (beispielsweise mit den Ausmaßen 8,5 × 5,4 cm) erhalten werden.

Bänder mit einer Graphit enthaltenden Schicht können z.B. in analoger Weise wie solche Bänder, die eine Magnetpigmentschicht enthalten, gegebenenfalls unter Zusatz von Hilfsmitteln, z.B. Binder hergestellt werden.

Auf diese sehr einfache Weise erhält man ein billiges Speichermedium, welches gegenüber mechanischen, thermischen und chemischen Belastungen sehr stabil ist und zudem von Laserlichtstrahlen in einem weiten Wellenlängenbereich und mit unterschiedlicher Lichtenergie ausgelesen werden kann.

Die Erfindung wird durch die folgenden Beispiele näher erläutert.

Beispiel 1

Eine Graphitscheibe mit einem Durchmesser von 10 cm wurde in einem Preßwerkzeug mit zentriertem Innenloch mit einem Druck von 750 bar gepreßt. Die so erhaltene Graphitschicht löste sich problemlos vom Preßwerkezug und zeigte einen deutlichen metallischen Glanz. Diese Schicht hatte über einen großen Wellenlängenbereich eine Reflektivität von 30 bis 35 %.

Als Vergleich diente eine auf Glas aufgesprühte bindemittelhaltige Graphitschicht. Die Reflektivitätswerte dieser Schicht waren sowohl in unbehandeltem Zustand (rauhe Oberfläche) als auch nach leichtem Polieren (glatte Oberfläche) deutlich schlechter.

Mit einem fokussierten Laserlichtstrahl wurden mit verschiedenen Wellenlängen durch kurze Lichtimpulse Signale in das Aufzeichnungsmedium "eingeschrieben". Die Größe der Signale war abhängig von der Energiedichte und konnte durch Laserlichtenergie und Fokus bzw. Zeit reguliert werden. Die Signale heben sich durch eine Reflektivitätsänderung von der glatten ("unbeschriebenen") Umgebung ab. Es handelt sich dabei um geringe Vertiefungen durch lokal verdampftes Graphit oder um eine thermisch induzierte Aufrauhung der vormals glatten Graphitoberfläche bzw. um eine Kombination aus beiden Effekten. Durch Belichten mit einem gepulsten Farbstofflaser konnten so große Signale (Durchmesser bis 0,3 mm) eingeschrieben werden, daß eine Kontrastmessung mit einem durch Glasfaser gekoppeltem Spektrometer und Mikroskop möglich war. Aus den Reflexionsunterschieden (Reflexion bei 830 nm) zwischen Signal (13 %) und Umgebung (33 %) ergab sich ein Kontrast von 20 % bei 830 nm.

Beispiel 2

Die Graphit-Speicherschicht wurde analog Beispiel 1 hergestellt und in einem zweiten Arbeitsgang mit einer Polymethylmethacrylat (PMMA)-Diskette (Dicke: 1 mm, Durchmesser 10 cm, zentriertes Innenloch mit 15 mm Durchmesser) so verpreßt, daß sich das Substrat nicht verformte. Um beide Schichten stabil aneinanderzufügen wurde eine Verklebung am äußeren und inneren Rand vorgenommen.

Die Speicherschicht ließ sich problemlos von der freien Seite (gegen Luft) und von der Substratseite (gegen PMMA) her "beschreiben". Der Kontrast war auf beiden Seiten im Rahmen der Fehlergrenzen gleich und die mikroskopischen Aufnahmen der Signale zeigten keine signifikanten Unterschiede. Eine Rauschmessung an einer qualitativ durchschnittlichen, nicht optimierten Speicherschicht ergab den 2,5-fachen Wert einer aufgedampften Tellurschicht.

Beispiel 3

Graphit-Speicherschichten wurden analog Beispiel 1 hergestellt und in einem zweiten Arbeitsgang zwischen zwei PMMA-Disketten (vgl. Beispiel 2) verklebt und/oder mit einem inneren und äußeren Haltering verklammert. Dadurch wurden zweiseitig identische, geschützte Sandwich-Speicher erhalten. Die Beschreibbarkeit und Qualität war mit den in Beispiel 1 und 2 beschriebenen Proben vergleichbar bei deutlich erhöhter mechanischer Stabilität.

Beispiel 4

Die Graphit-Speicherschicht wurde analog Beispiel 1 (Durchmesser 13 cm) hergestellt und in einem zweiten Arbeitsgang (analog Beispiel 3) zwischen zwei gerillte Polycarbonat-Disketten (Durchmesser 13 cm) verklebt. Die Beschreibbarkeit und Qualitätsmerkmale waren analog den voranstehenden Beispielen.

Beispiel 5

Ein Graphit-Speicher wurde analog Beispiel 4 aufgebaut. Als Substrat wurden jedoch zwei gerillte Polycarbonat-Disketten verwendet, deren Rillen mit einer bindemittelhaltigen Farbstofflösung durch Spincoating aufgefüllt waren, wobei die bindemittelhaltige Farbstoffschicht einen deutlich höheren Brechungsindex als Polycarbonat aufwies. Die Testergebnisse waren vergleichbar mit denen, welche mit einem in Beispiel 4 beschriebenen Speicher erzielt wurden.

Beispiel 6

Eine Graphit-Schicht wurde analog Beispiel 1 hergestellt. In einem zweiten Arbeitsgang wurde im Fall a) einseitig und im Fall b) beidseitig als Farbstoff Vanadylphthalocyanin aufgedampft. In einem dritten Schritt wurde das Substrat (PMMA-Disketten) analog den Beispielen 3 bis 5 jeweils auf die Farbstoffschicht aufgebracht. In diesem System diente die Graphit-Schicht, verglichen mit bekannten Speichermedien sowohl als Absorber als auch als Reflektor. Die Beschreibbarkeit mit einem auf das Absorptionsmaximum des Farbstoffes abgestimmten Wellenlängen des Laserlichtstrahles wurde bei niedrigeren Energiedichten erreicht.

Beispiel 7

Aus einer Graphitfolie von 0,2 mm Dicke wurden Scheiben von 10 cm Durchmesser ausgestanzt. Diese Rohlinge wurden in einem Preßwerkzeug mit zentriertem Innenloch bei einem Druck von 750 bar gepreßt. Die so erhaltene Graphitschicht löste sich problemlos vom Preßwerkzeug und zeigte im Wellenlängenbereich von 500 bis 1200 nm eine Grundreflektivität von 30 bis 35 %. Diese Graphitscheibe wurde in einem entsprechenden Preßwerkzeug zusammen mit einer Matrize verpreßt, wobei die auf der Matrize befindliche Information auf die Graphitoberfläche (als Vertiefungen) übertragen wurde. Die Graphitscheibe (Informationsträger) wurde aus dem Preßwerkzeug entnommen und unter leichtem Druck (ca. 50 bar) zwischen zwei 1,2 mm dicken PMMA-Scheiben (Durchmesser: 10cm) verklebt. Aus diesem Speicher wurde die Information mittels eines gepulsten Farbstofflasers ($\lambda_W$ = 740 nm) wieder ausgelesen. Der durch Mikroskop-Spektroskopie ermittelte Kontrast (Reflexion [Umgebung]-Reflexion [Information]) betrug 10 bis 20 %. Die Information blieb bei allen Stabilitätstests (Temperatur-, Feuchtigkeits- und Lösungsmittelbelastungen), welche das Substrat übersteht, unverändert erhalten.

Beispiel 8

Aus einer 0,1 mm dicken Graphitfolie wurde eine analog zu Beispiel 7 hergestellte Graphitscheibe mit einer Grundreflektivität von ca. 30 % erhalten. Diese wurde in ein Preßwerkzeug mit 2 Matrizen (Boden und Deckel) eingelegt und mit ca. 1000 bar gepreßt. Die beidseitig Informationen enthaltende Graphitscheibe wurde wie im Beispiel 7 weiter bearbeitet und zeigte bei doppelter Speicherkapazität die gleichen Eigenschaften.

Beispiel 9

Eine CD-ROM auf Graphitbasis wurde analog zu Beispiel 8 hergestellt, jedoch mit einem Durchmesser von 13 cm und durch Verkleben mit zwei Polycarbonat-Scheiben mechanisch geschützt. Der Speicher zeigte die gleichen Eigenschaften wie die in den Beispielen 7 und 8 beschriebenen Systeme.

Beispiel 10

Ein analog zu Beispiel 9 hergestellter CD-ROM-Speicher wurde mit einem HeNe-Laser ausgelesen.

Beispiel 11

Ein analog zu Beispiel 9 hergestellter CD-ROM-Speicher wurde mit einem GaAlAs-Halbleiterlaser ausgelesen. Die verwendeten Wellenlängen waren 780 und 830 nm.

Beispiel 12

Ein analog zu Beispiel 9 hergestellter CD-ROM Speicher wurde mit einem Nd-YAG-Laser ausgelesen.

Beispiel 13

Beispiel 7 wurde wiederholt, wobei anstelle einer Scheibe eine Karte mit den Ausmaßen 8,5 × 5,4 cm verwendet wurde.

**Patentansprüche**

1. Optisches Aufzeichnungsmedium, enthaltend eine Speicherschicht und eine oder zwei vorgerillte Substratschichten, dadurch gekennzeichnet, daß die Speicherschicht Graphit als Speichermaterial enthält.

2. Optisches Aufzeichnungsmedium nach Anspruch 1, dadurch gekennzeichnet, daß die Substratschicht im wesentlichen aus Polymethylmethacrylat besteht.

3. Optisches Aufzeichnungsmedium nach Anspruch 1, dadurch gekennzeichnet, daß die Substratschicht im wesentlichen aus Polycarbonat besteht.

4. Verfahren zur Herstellung eines optischen Aufzeichnungsmediums gemäß Anspruch 1, dadurch gekennzeichnet, daß man aus einer Graphitfolie einen Rohling mit einem Durchmesser von 10 bis 30 cm ausstanzt, diesen anschließend bei einem Druck von 300 bis 8000 bar preßt und ihn dann in einem weiteren Preßvorgang mit einer oder zwei vorgerillten Substratschichten versieht.

5. Verwendung des optischen Aufzeichnungsmediums gemäß Anspruch 1 als Read Only Memory-Informationsträger.

6. Verwendung des optischen Aufzeichnungsmediums gemäß Anspruch 5, dadurch gekennzeichnet, daß der Informationsträger in Form einer Compact Disc vorliegt.

7. Verwendung des optischen Aufzeichnungsmediums gemäß Anspruch 5, dadurch gekennzeichnet, daß der Informationsträger in Form einer Karte vorliegt.

8. Verwendung des optischen Aufzeichnungsmediums gemäß Anspruch 5, dadurch gekennzeichnet, daß der Informationsträger in Form eines Bands vorliegt.

## Claims

1. An optical recording medium containing a storage layer and one or two substrate layers already possessing grooves, wherein the storage layer contains graphite as the storage material.

2. An optical recording medium as claimed in claim 1, wherein the substrate layer essentially consists of polymethyl methacrylate.

3. An optical recording medium as claimed in claim 1, wherein the substrate layer essentially consists of a polycarbonate.

4. A process for the production of an optical recording medium as claimed in claim 1, wherein a blank having a diameter of from 10 to 30 cm is punched out from a graphite film, the latter is subsequently pressed under from 300 to 8000 bar and then provided with one or two substrate layers already possessing grooves in a further pressing process.

5. The use of an optical recording medium as claimed in claim 1 as a Read Only Memory information carrier.

6. The use of an optical recording medium as claimed in claim 5, wherein the information carrier is in the form of a compact disk.

7. The use of an optical recording medium as claimed in claim 5, wherein the information carrier is in the form of a card.

8. The use of an optical recording medium as claimed in claim 5, wherein the information carrier is in the form of a tape.

## Revendications

1. Milieu d'enregistrement optique contenant une couche mémoire et une ou deux couches de substrat cannelées au préalable, caractérisé en ce que la couche mémoire contient en tant que matière mémoire du graphite.

2. Milieu d'enregistrement optique selon la revendication 1, caractérisé en ce que la couche de substrat consiste essentiellement en polyméthacrylate de méthyle.

3. Milieu d'enregistrement optique selon la revendication 1, caractérisé en ce que la couche de substrat consiste essentiellement en polycarbonate.

4. Procédé de préparation d'un milieu d'enregistrement optique selon la revendication 1, caractérisé en ce que, dans une feuille de graphite, on découpe à l'emportepièce un morceau de diamètre 10 à 30 cm, on comprime ensuite ce morceau sous une pression de 300 à 8000 bar puis, dans une autre opération de compression, on l'assemble avec une ou deux couches de substrat cannelées au préalable.

5. Utilisation du milieu d'enregistrement optique selon la revendication 1 en tant que support d'informations "Read Only Memory".

6. Utilisation du milieu d'enregistrement optique selon la revendication 5, caractérisée en ce le support d'informations est à l'état de disque compact.

7. Utilisation du milieu d'enregistrement optique selon la revendication 5, caractérisée en ce que le support d'informations est à l'état de carte.

8. Utilisation du milieu d'enregistrement optique selon la revendication 5, caractérisée en ce que le support d'informations est à l'état de bande.